# FASCICULE DE BREVET EUROPEEN

(11) **EP 1 817 537 B1**
(45) Date de publication et mention de la délivrance du brevet: **05.03.2008**
(21) Numéro de dépôt: 05793482.0
(22) Date de dépôt: 27.07.2005
(51) Int. Cl.: F28F 13/18, B23K 1/20

(54) **PROCÉDÉ POUR LA FABRICATION D'UN ÉCHANGEUR DE CHALEUR COMPORTANT UN TRAITEMENT DE SURFACE, ET ÉCHANGEUR DE CHALEUR AINSI OBTENU**
VERFAHREN ZUR HERSTELLUNG EINES WÄRMETAUSCHERS MIT OBERFLÄCHENBEHANDLUNG, UND DAMIT HERGESTELLTER WÄRMETAUSCHER
METHOD OF PRODUCING A HEAT EXCHANGER, COMPRISING A SURFACE TREATMENT, AND HEAT EXCHANGER THUS PRODUCED

(30) Priorité: 30.07.2004 FR 0408459
(43) Date de publication de la demande: 15.08.2007
(73) Titulaire: VALEO SYSTEMES THERMIQUES, 78320 Le Mesnil Saint-Denis (FR)
(72) Inventeur: CASENAVE, Christian, F-72210 La Suze sur Sarthe (FR); MESLIN, Frédéric, F-56190 Muzillac (FR)
(74) Mandataire: Rolland, Jean-Christophe
(86) Numéro de dépôt international: PCT/FR2005/001961
(87) Numéro de publication internationale: WO 2006/024749

(56) Documents cités:
- EP-A- 0 409 130
- EP-A- 0 449 459
- EP-A- 1 201 788
- US-A- 5 042 574
- US-B1- 6 568 465

## Description

L'invention concerne les échangeurs de chaleur et les procédés de fabrication qui leur sont dédiés.

L'invention concerne plus particulièrement un procédé pour la fabrication d'un échangeur de chaleur de type brasé, dans lequel on réalise un traitement de surface.

Un tel procédé est utilisé par exemple pour la fabrication d'évaporateurs utilisés dans des circuits de climatisation de véhicules automobiles.

L'invention concerne également un échangeur de chaleur fabriqué selon ce procédé de fabrication, en particulier un évaporateur pour circuit de climatisation de véhicule automobile.

On connaît des traitements de surface prévus pour conférer à la surface d'un échangeur de chaleur des propriétés déterminées. Par exemple, la surface en contact avec l'air ambiant est traitée de manière à prévenir ou à supprimer la croissance des micro-organismes sur cette surface, ces micro-organismes étant eux-même une source ou un milieu favorable aux odeurs perceptibles lors du fonctionnement de cet échangeur.

Le traitement de surface est généralement réalisé en plongeant l'échangeur de chaleur dans une série de bains contenant alternativement des agents actifs destinés à conférer à la surface des propriétés recherchées et des liquides de rinçage destinés à préparer l'échangeur de chaleur pour le bain suivant. Il est également connu d'appliquer un revêtement par pulvérisation.

Ainsi, le document US 5 376 411 suggère d'appliquer un revêtement sur un échangeur de chaleur en le plongeant dans un bain de film hydrophile puis en appliquant sur ce revêtement un agent antimicrobien avant que le revêtement n'ait complètement séché.

Par ailleurs, le document EP 1 201 788 décrit l'application sur la surface d'un échangeur de chaleur en aluminium de deux films présentant des propriétés anticorrosives et hydrophiles.

Il est à noter que dans ces deux documents, l'application d'un revêtement n'est faite qu'une fois l'échangeur de chaleur assemblé et brasé. En effet, les revêtements décrits ne sont pas propres à résister à des hautes températures telles que celles rencontrées lors du processus de brasage fort. Un brasage fort est un brasage réalisé à des températures supérieures à 400°C et pouvant atteindre 630°C.

Ces procédés de fabrication et les échangeurs de chaleur qui en résultent présentent de nombreux inconvénients. En premier lieu, le traitement de surface étant réalisé après le brasage, il est nécessaire de traiter l'échangeur de chaleur d'un seul tenant. Cela implique le traitement de surfaces qui ne le nécessitaient pas forcément et donc une perte de productivité.

D'autre part, l'obligation de traiter l'échangeur de chaleur entier implique l'absence de contrôle sur la quantité de revêtement appliquée sur chaque composant de l'échangeur de chaleur.

Enfin, la nécessité de préparer l'échangeur de chaleur et de retirer les résidus du brasage avant les bains ou la pulvérisation tend à réduire la productivité de la chaîne de production.

La présente invention a pour objet un procédé pour la fabrication d'un échangeur de chaleur qui remédie à ces inconvénients.

A cet effet, l'invention propose un procédé pour la fabrication d'un échangeur de chaleur, en particulier d'un évaporateur, comportant la préparation, l'assemblage et le brasage de composants de l'échangeur de chaleur, le brasage étant effectué dans des conditions de température données, dans lequel est effectuée, préalablement à l'assemblage et au brasage, une opération de traitement de surface consistant à appliquer sur au moins un composant choisi un revêtement comportant un support, au moins un agent actif propre à conférer des propriétés choisies à l'échangeur de chaleur lors de son fonctionnement, et au moins un agent de protection thermique propre à permettre au revêtement de résister aux conditions de températures de brasage fort.

La réalisation du traitement de surface avant l'assemblage et le brasage des composants de l'échangeur de chaleur permet d'obtenir un échangeur de chaleur possédant des propriétés de surface recherchées et ce dès la fin du brasage. Cela permet de simplifier la production de l'échangeur de chaleur en traitant des composants que l'on peut choisir.

Ce procédé favorise également un meilleur rendement de la chaîne de production puisque les risques associés au traitement de surface sont ramenés aux composants le subissant et non plus à l'échangeur de chaleur entier.

Dans une variante du procédé de l'invention, l'agent actif est un agent hydrophile. Dans une deuxième variante du procédé de l'invention l'agent actif est un agent antimicrobien.

L'utilisation de ces agents actifs permet d'offrir à l'échangeur de chaleur fabriqué selon le procédé de l'invention des propriétés de surface particulièrement intéressantes.
L'agent hydrophile est particulièrement utile dans le cadre des échangeurs de chaleur qui tendent à déshumidifier le fluide qu'on cherche à refroidir ou réchauffer. Cet agent actif permet d'éviter les projections d'eau, l'eau s'écoulant le long de la surface de l'échangeur.
L'agent antimicrobien est avantageux dans ce même type d'échangeurs de chaleur, en ce qu'il évite le développement ou assure la destruction des microbes (bactéries, moisissures, champignons) se développant suite à l'humidité ambiante et qui ont tendance à produire des odeurs désagréables.

Dans une variante préférée du procédé de l'invention, le revêtement comporte un support, un agent hydrophile, un agent antimicrobien et un agent de protection thermique. Cette variante du procédé de l'invention offre à l'échangeur de chaleur des propriétés surfaciques particulièrement intéressantes. Un tel procédé permet de fabriquer un échangeur de chaleur particulièrement adapté aux besoins des évaporateurs utilisés dans les circuits de climatisation de véhicules automobiles. En effet, les évaporateurs déshumidifient l'air qui les traverse, ce qui a pour effet de générer un condensat ayant des conséquences néfastes que les agents antimicrobien et hydrophile permettent de maîtriser, comme décrit plus haut.

Avantageusement, l'agent de protection thermique comporte un bronze d'aluminium et/ou un liant à base de silicium. L'utilisation d'un agent de protection thermique tel que celui-ci permet d'offrir au revêtement utilisé dans le traitement de surface de l'invention des propriétés thermiques particulièrement favorables dans le cadre de brasages tendres (température de brasage inférieure à 450°C) ou forts et des conditions de températures qui les caractérisent. Ces propriétés thermiques permettent notamment au revêtement de supporter ces conditions de température et d'offrir à l'échangeur de chaleur les propriétés surfaciques des agents actifs après le brasage.

Selon une autre variante préférée du procédé de l'invention les composants de l'échangeur de chaleur comportent au moins un collecteur, des canaux de circulation d'un fluide et des ailettes en contact avec les canaux, et le procédé est caractérisé en ce que le traitement de surface est réalisé sur la matière des ailettes.

La restriction du traitement de surface aux seules ailettes permet de réduire le cycle de production en ne traitant que les composants qui le nécessitent, cette restriction permettant également de faire des économies matérielles de revêtement et de mieux contrôler l'épaisseur de revêtement appliquée.

Dans une variante préférée du procédé de l'invention, pour chaque ailette, la préparation comporte une étape de traitement de surface et une étape de mise en forme de l'ailette. Dans cette variante, le traitement de surface peut être réalisé par trempage, par pulvérisation ou par enduction de la bande, soit lors de la fabrication de la bande d'aluminium destinée à la fabrication de l'ailette, soit après la fabrication de cette bande.

Dans une autre variante préférée du procédé selon l'invention, pour chaque ailette, la préparation comporte dans un premier temps une étape de mise en forme de l'ailette et dans un second temps le traitement de surface. Dans cette autre variante, le traitement de surface peut être réalisé par trempage ou par pulvérisation.

Lorque le traitement de surface est réalisé lors de la fabrication de la bande d'alluminium l'invention présente l'avantage supplémentaire de maîtriser les rejets organiques par oxydation thermique du support. Cette oxydation est favorisée par la température de la bande en sortie du procédé d'obtention par laminage et par la présence d'oxygène dans l'air. L'application du revêtement ne nuit pas à la longévité compte-tenu de sa tenue en température. Elle présente l'avantage de sécher le revêtement sans utilisation de moyens supplémentaires. La bande l'aluminium est ensuite enroulée pour être transportée sur son lieu d'utilisation, sur lequel elle est mise en forme sous la forme d'ailettes, et celles-ci sont assemblés aux autres composants de l'échangeur.

Ces variantes permettent d'offrir une grande souplesse à la chaîne de production en ce qu'il est possible, selon la complexité de la mise en forme de l'ailette, de réaliser le traitement de surface avant ou après la mise en forme de l'ailette.

Le procédé de l'invention peut également comporter, lors de la préparation des composants, une étape de séchage, et le brasage peut en outre être réalisé selon le protocole du brasage fort, qui peut être réalisé sous vide ou en atmosphère contrôlée.

L'invention concerne également un échangeur de chaleur fabriqué selon un procédé comme décrit précédemment et comportant des composants dont au moins un a été soumis au traitement de surface comme décrit précédemment. En outre, l'échangeur de chaleur selon l'invention peut comporter au moins une boîte collectrice, des canaux de circulation d'un fluide et des ailettes en contact avec les canaux, le traitement de surface étant réalisé sur la matière des ailettes.

Dans une forme de réalisation préférée de l'invention, les canaux sont des tubes. Dans une seconde forme de réalisation préférée de l'invention les canaux sont constitués par une multiplicité de paires de plaques empilées. Ces deux formes de réalisation préférées de l'invention permettent d'offrir des échangeurs de chaleur classiques tels que les échangeurs à tubes/ailettes ou à plaques/ailettes dont les propriétés de surface sont améliorées comme décrit plus haut.

Enfin, les composants de l'échangeur de chaleur selon l'invention peuvent être en alliage d'aluminium, en cuivre ou en tout autre matériau métallique susceptible d'être brasé, et cet échangeur peut être un évaporateur utilisé dans des circuits de climatisation et plus particulièrement des circuits de climatisation de véhicules automobiles.

D'autres caractéristiques et avantages de l'invention apparaîtront encore à la lecture de la description qui suit d'exemples de réalisation donnés à titre illustratif et non limitatif en référence aux figures annexées sur lesquelles
- la figure 1 est une vue schématique de face d'un échangeur de chaleur à tubes/ailettes fabriqué selon le procédé de l'invention, avant le brasage,
- la figure 2 est un schéma bloc représentant diverses étapes du procédé de l'invention,
- la figure 3 est un schéma bloc représentant partiellement une étape du procédé de la figure 2,
- la figure 4 est un schéma bloc représentant partiellement une étape du procédé de la figure 2 selon une variante préférée du procédé de l'invention,
- la figure 5 est un schéma bloc représentant partiellement une étape du procédé de la figure 2 selon une autre variante préférée du procédé de l'invention,
- la figure 6 est une vue partielle de côté d'un évaporateur à plaques fabriqué selon le procédé de la figure 2,
- la figure 7 est une vue schématique d'une réalisation du traitement de surface des ailettes par trempage,
- la figure 8 est une vue schématique d'une réalisation du traitement de surface des ailettes par pulvérisation,
- la figure 9 est une vue schématique d'une réalisation du traitement de surface des ailettes par enduction, et
- la figure 10 est une vue schématique d'une partie du schéma bloc de la figure 4.

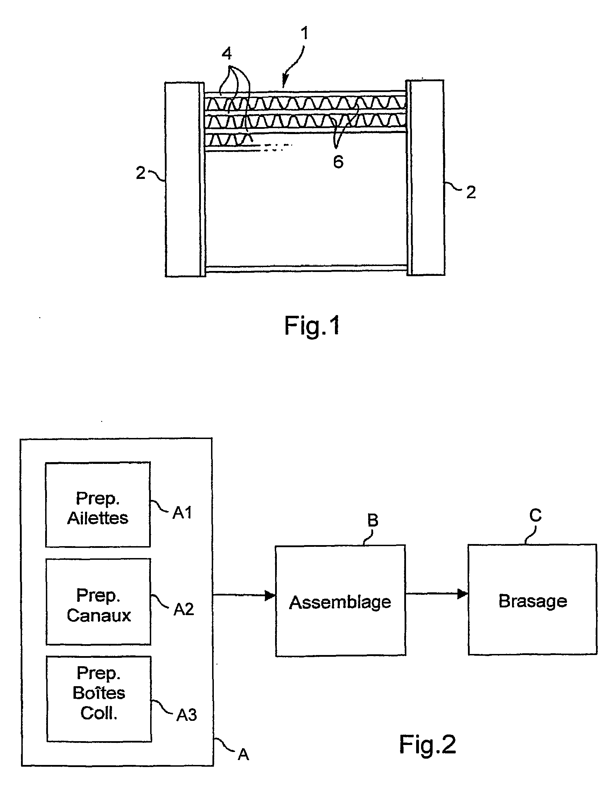

La figure 1 illustre schématiquement une vue de face d'un échangeur de chaleur 1 fabriqué selon le procédé de l'invention.

L'échangeur de chaleur 1 comprend de manière connue, des composants, parmi lesquels deux boîtes collectrices 2, des canaux 4, et des ailettes 6 (également connues de l'homme du métier sous la dénomination "intercalaires"). Les deux boîtes collectrices 2 sont superposées et sont mises en communication par l'intermédiaire des canaux 4 qui sont disposés et alignés et dans lesquels circule un fluide destiné à transférer sa chaleur à l'air traversant l'échangeur. Les ailettes 6 sont situées entre les boîtes collectrices 2 transversalement à l'axe des canaux 4, et sont en contact direct avec l'air extérieur à l'échangeur.

L'échangeur de chaleur 1 décrit ici a été fabriqué selon le procédé de l'invention mais est présenté avant le brasage des canaux 4 et des ailettes 6. Les canaux 4 sont ici des tubes plats, mais ils pourraient également être des tubes de section circulaire ou ovale ou de toute autre forme connue de l'homme du métier.

Les ailettes 6 sont ici ondulées, mais elles pourraient également être planes ou de toute forme connue de l'homme du métier. Elles sont de forme sensiblement rectangulaire. Elles ont subi lors de leur préparation un traitement de surface caractéristique du procédé selon l'invention et qui sera décrit par la suite.

La figure 2 représente un schéma-bloc du procédé de l'invention. Le procédé de l'invention comporte trois étapes représentées respectivement par des blocs A, B et C.

Le bloc A correspond à une étape de préparation des composants de l'échangeur 1. Le bloc A se compose de trois sous-blocs A1, A2 et A3 correspondant à trois étapes simultanées sur la chaîne de production. Le sous-bloc A1 correspond à l'étape de préparation des ailettes 6, le bloc A2 correspond à la préparation des canaux 4, et le bloc A3 correspond à la préparation des boîtes collectrices 2.

Le bloc B correspond à une étape d'assemblage des composants de l'échangeur 1. Lors de cette étape, les boîtes collectrices 2, les canaux 4 et les ailettes 6 sont assemblés en vue d'une étape représentée par le bloc C.

Le bloc C représente l'étape de brasage durant laquelle on applique aux composants assemblés suite à l'étape d'assemblage un brasage qui, dans l'exemple décrit ici, est un brasage fort sous atmosphère contrôlée pouvant atteindre des températures de 630°C et réalisé dans un four. L'atmosphère de ce four contient de l'azote en quantité choisie, ce qui permet de maîtriser les problèmes d'oxydation et permet d'offrir un brasage de qualité. Le brasage pourrait également être un brasage faible ou tout autre procédé de brasage connu de l'homme du métier.

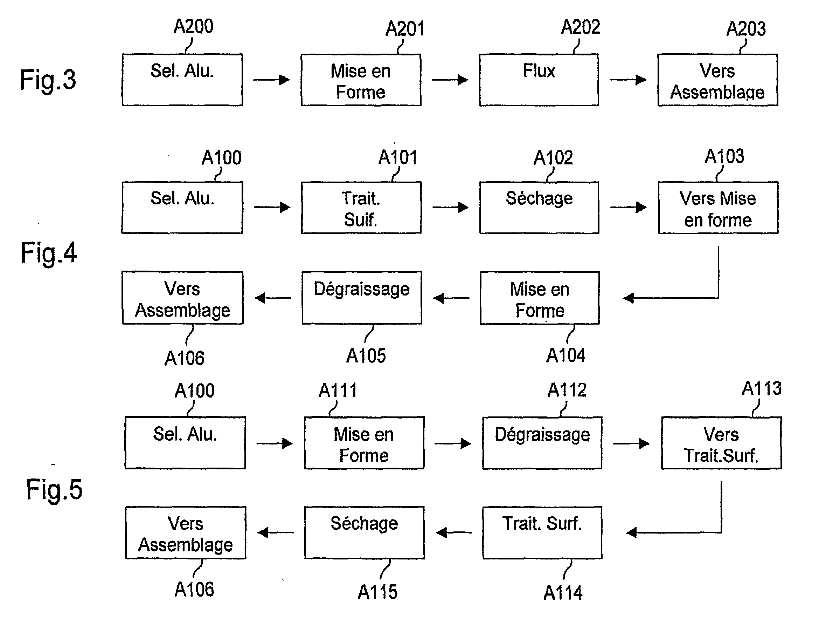

La figure 3 est un schéma-bloc illustrant le bloc A2 représenté sur la figure 2. Le bloc A2 représente l'étape de préparation des canaux 4 avant l'assemblage.

L'étape représentée par le bloc A2 comporte une étape A200, une étape A201, une étape A202 et une étape A203.

Une matière première est sélectionnée lors de l'étape A200. C'est un matériau en alliage d'aluminium composé de deux couches, une âme en alliage choisi dans la série 3000, par exemple 3003 et d'une couche composé d'un alliage choisi dans la série 4000, par exemple 4045 ou 4343, qui constitue le matériau d'apport constituant la brasure. Lors de l'étape A201, la matière première subit des transformations afin de lui donner la forme choisie pour les canaux 4.
Suite à l'étape A201, l'étape A202 comporte le dégraissage des canaux obtenus, puis l'application sur ceux-ci d'un flux favorisant le brasage. On obtient ainsi les canaux 4 que l'on déplace vers un lieu d'assemblage lors de l'étape A203.

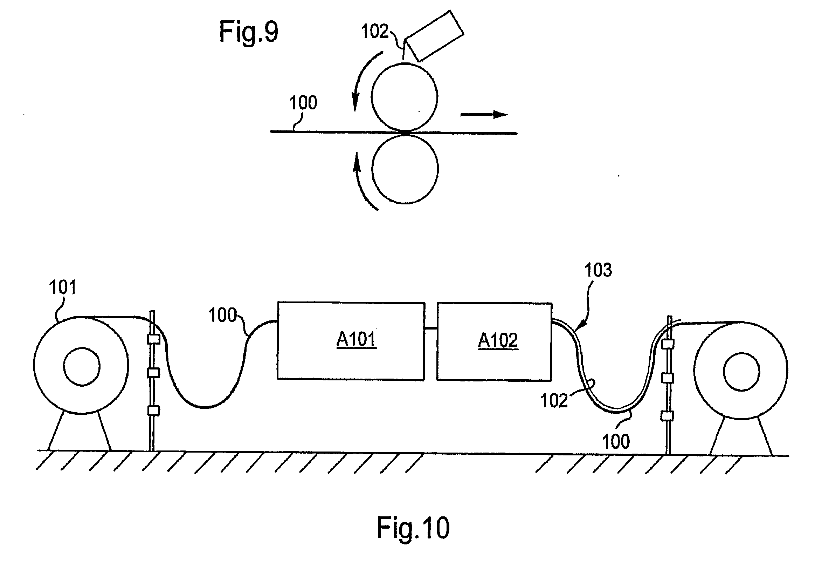

Nous allons maintenant décrire à l'aide des figures 4 et 10 une partie du procédé selon une variante préférée de l'invention.

Comme on peut le voir sur la figure 4, le bloc A1 de l'étape de préparation représentée sur la figure 2 comporte une étape A101, une étape A102, une étape A103, une étape A104, une étape A105, et une étape A106.

Une matière première 100 est sélectionnée pour former les ailettes lors de l'étape A100. C'est un alliage d'aluminium choisi dans la série 3000, par exemple 3003. Comme on peut le voir sur la figure 10, cet alliage d'aluminium est conditionné en bobine 101. L'étape A101 consiste à appliquer sur la surface déroulée de la bobine 101 une couche d'un revêtement 102 que l'on décrira par la suite.

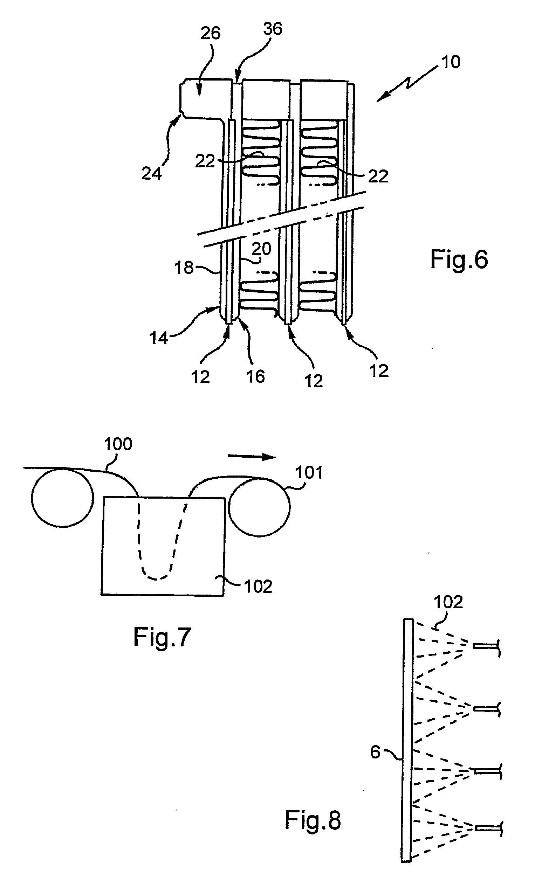

L'application du revêtement 102 est ici réalisée par trempage, comme illustré sur la figure 7. Cette application pourrait néanmoins être réalisée par pulvérisation, comme représenté sur la figure 8 ou par enduction, comme représenté sur la figure 9.

L'étape A102 consiste à sécher le revêtement que l'on vient d'appliquer sur la surface de la matière première 100 déroulée, ce qui donne un produit intermédiaire 103.

Le produit intermédiaire 103 obtenu après l'étape A102 est enroulé au cours de l'étape A103 et déplacé vers un secteur différent de la chaîne de production. Il est alors déformé au cours de l'étape A104 afin de donner une forme choisie aux ailettes. Les ailettes ainsi formées sont ensuite dégraissées au cours de l'étape représentée A105. A la fin de cette étape, on obtient les ailettes 6 que l'on déplace vers le lieu d'assemblage lors de l'étape A106.

Le procédé selon l'invention présente l'avantage d'avancer l'intégration du traitement de surface des ailettes 6 sur la chaîne de production. Cela peut être particulièrement avantageux lorsque la géométrie des ailettes 6 obtenues après formation de celles-ci ne se prête pas aisément à une application uniforme d'un revêtement tel que celui décrit par le tableau ci-dessous.

| **Agent** | **Composition** | **Quantité (% masse du mélange)** |
|---|---|---|
| Support | Xylene + 1-Methoxylpropylacetate-2 | 40 - 50 % |
| Tensio-actif | Bentone 38 7.5% | 2 - 5% |
| Résistance microbienne | Sylosiv A 100 + Sel de cuivre | 0,5 - 2% |
| Liant à base de silicium | Résine Baysilone P500, 50% | 10 - 20% |
| | | |
| Support | Xylene + 1-Methoxylpropylacetate-2 | 40 - 50 % |
| Ecran thermique | Bronze d'aluminium | 30 - 40% |

Comme le montre ce tableau, le revêtement utilisé dans l'exemple ici décrit comporte un support, deux agents actifs et un agent de protection thermique qui comporte un liant et un écran thermique.

Le support est un mélange de xylène et de 1-méthoxypropylacetate-2. Ce support sert à déposer le revêtement sur la surface des ailettes.

Un des deux agents actifs est un tensio-actif à base de Bentone à 7,5%. Ce tensio-actif permet avant le brasage d'améliorer la mouillabilité du revêtement, ce qui en permet une application plus aisée.

Le deuxième agent actif est un agent de résistance à la contamination microbienne constitué d'un mélange de Sylosiv A 100 imprégné de sel de cuivre, qui confère à l'échangeur brasé d'excellentes propriétés antimicrobiennes.

L'agent de protection thermique est un mélange d'un liant à base de silicium, qui est ici de la résine Baysilone P500 et d'un écran thermique qui est ici un bronze d'aluminium.

Le liant à base de silicium permet, avant le brasage, d'améliorer l'adhérence du revêtement sur la surface des ailettes. Il permet ensuite au revêtement de résister aux conditions de température du brasage. Après le brasage, il offre à l'échangeur de chaleur des propriétés hydrophiles et assure une meilleure adhérence du revêtement sur la surface. L'écran thermique est un bronze d'aluminium dont la fonction est de protéger le revêtement lors du brasage.

Les ailettes 6 représentent typiquement environ 90 % de la surface totale externe de l'échangeur de chaleur 1 et sont les composants dont la surface est la plus sollicitée lors de son fonctionnement. Le fait de ne traiter que la surface des ailettes 6 et pas la surface externe des canaux 4, comme il apparaît dans l'exemple de réalisation ici décrit, assure donc des propriétés surfaciques optimales pour l'échangeur de chaleur 1 tout en simplifiant grandement le procédé de fabrication.

La figure 5 est un schéma-bloc qui illustre partiellement une seconde variante préférée du procédé selon l'invention, notamment le bloc A1 de la figure 2. Par similarité avec la première variante décrite à la figure 4, les références numériques ont été conservées et les éléments différents ont vu leur numérotation additionnée du nombre dix.
Cette variante comporte l'étape A100, une étape A111, une étape A112, une étape A113, une étape A114, une étape A115, et l'étape A106.

L'étape A111 consiste à modifier la matière première pour lui donner la forme choisie pour les ailettes. Une fois formée, la matière première est dégraissée lors de l'étape A112 et on obtient un produit intermédiaire déplacé lors de l'étape A113.

On applique ensuite sur le produit intermédiaire le revêtement de la figure 5 lors de l'étape A114. Cette application est ici réalisée par trempage mais pourrait être réalisée par pulvérisation. Enfin, l'ailette 6 est obtenue après l'étape de séchage A115, suite à l'application du revêtement, puis déplacée selon A106.

Cette variante du procédé de l'invention permet d'obtenir une chaîne de production plus efficace lorsque la forme imposée aux ailettes 6 est géométriquement simple.

La figure 6 est une vue partielle de côté d'un évaporateur 10 à plaques/ailettes fabriqué selon le procédé de l'invention. L'évaporateur 10 comporte une multiplicité de plaques 12 qui sont formées chacune par l'assemblage d'un premier élément 14 et d'un second élément 16 définissant respectivement une face 18 et une face 20. Les faces 18 et 20 sont généralement planes et parallèles entre elles.

L'évaporateur 10 comporte en outre une multiplicité d'ailettes ondulées 22 agencées chacune entre deux plaques adjacentes, au contact d'une première face 18 d'une plaque et d'une seconde face 20 d'une plaque adjacente.

Dans une portion supérieure 24, chaque premier élément 14 comporte deux conduits 26 qui s'étendent en saillie vers l'extérieur de la première face 18. Chaque conduit 26 s'empile avec un conduit 36 que comporte le deuxième élément 16. Chaque plaque 12 forme ainsi une chambre dans laquelle circule un fluide réfrigérant.

Le premier et le second élément 14 et 16 sont obtenus avantageusement par emboutissage d'une plaque métallique à base d'aluminium. Les ailettes 22 ont fait l'objet du traitement de surface décrit précédemment.

On peut concevoir des évaporateurs fabriqués selon le procédé de l'invention dans lesquels les plaques seraient réalisées de manière différentes ou remplacées par des tubes associés à des boîtes collectrices.

Les échangeurs de l'invention peuvent être réalisés notamment sous la forme d'un radiateur de refroidissement d'un moteur de véhicule automobile ou d'un radiateur de chauffage de l'habitacle d'un véhicule automobile tout comme dans la réalisation d'échangeurs pour des circuits de climatisation de véhicules automobiles.

L'invention ne se limite pas aux modes de réalisation décrits ci-avant, seulement à titre d'exemple, mais elle englobe toutes les variantes que pourra envisager l'homme du métier, comme par exemple la réalisation du traitement de surface lors de la fabrication de la bande d'aluminium destinée à la fabrication de l'ailette, après le laminage de cette bande et avant son conditionnement en bobine.

## Revendications

1. Procédé pour la fabrication d'un échangeur de chaleur, en particulier d'un évaporateur, comportant la préparation (A), l'assemblage (B) et le brasage (C) de composants de l'échangeur de chaleur (1), le brasage(C) étant effectué dans des conditions de température données, **caractérisé en ce qu'**il comporte, préalablement à l'assemblage (B) et au brasage (C), une opération de traitement de surface (A101, A114) consistant à appliquer sur au moins un composant (6) choisi un revêtement (102) comportant un support, au moins un agent actif propre à conférer des propriétés choisies à l'échangeur de chaleur (1) lors de son fonctionnement, et au moins un agent de protection thermique propre à permettre au revêtement (102) de résister aux conditions de température de brasage.

2. Procédé selon la revendication 1, **caractérisé en ce que** ledit agent actif est un agent hydrophile.

3. Procédé selon la revendication 1 ou 2, **caractérisé en ce que** ledit agent actif est un agent antimicrobien.

4. Procédé selon la revendication 3, **caractérisé en ce que** ledit revêtement (102) comporte un support, un agent hydrophile, un agent antimicrobien et un agent de protection thermique.

5. Procédé selon l'une des revendications 1 à 4, **caractérisé en ce que** ledit agent de protection thermique comporte un bronze d'aluminium et/ou un liant à base de silicium.

6. Procédé selon l'une des revendications 1 à 5, dans lequel les composants de l'échangeur de chaleur comportent au moins un collecteur (2), des canaux (4) de circulation d'un fluide et des ailettes (6) en contact avec les canaux (4), **caractérisé en ce que** le traitement de surface (A101, A114) est réalisé sur la matière des ailettes (6).

7. Procédé selon la revendication 6, **caractérisé en ce que** pour chaque ailette (6), la préparation comporte une étape de traitement de surface (A101) et une étape de mise en forme (A104) de l'ailette (6).

8. Procédé selon la revendication 7, **caractérisé en ce que** le traitement de surface (A101) est réalisé par trempage.

9. Procédé selon la revendication 7, **caractérisé en ce que** le traitement de surface (A101) est réalisé par pulvérisation.

10. Procédé selon la revendication 7, **caractérisé en ce que** le traitement de surface (A101) est réalisé par enduction.

11. Procédé selon l'une des revendications 6 à 10, **caractérisé en ce que** la préparation (A) comporte une étape de séchage (A102, A115).

12. Procédé selon l'une des revendications 1 à 11, **caractérisé en ce que** le brasage (C) est un brasage fort réalisé sous atmosphère contrôlée à une température supérieure à 400°C et sensiblement égale à 630°C.

13. Procédé selon l'une des revendications 1 à 11, **caractérisé en ce que** le brasage (C) est un brasage fort réalisé sous vide.

14. Echangeur de chaleur **caractérisé en ce qu'**il est fabriqué selon un procédé selon l'une des revendications précédentes et comporte des composants dont au moins un a été soumis au traitement de surface (A101, A114) selon l'une des revendications précédentes.

15. Echangeur de chaleur selon la revendication 14, **caractérisé en ce que** les composants comportent au moins un collecteur (2), des canaux (4) de circulation d'un fluide et des ailettes (6) en contact avec les canaux (4), et **en ce que** le traitement de surface (A101, A114) est réalisé sur la matière des ailettes (6).

16. Echangeur de chaleur selon la revendication 15, **caractérisé en ce que** les canaux sont des tubes (4).

17. Echangeur de chaleur selon la revendication 16, **caractérisé en ce que** les canaux sont des plaques (12).

18. Echangeur de chaleur selon l'une des revendications 14 à 17, **caractérisé en ce que** les composants sont en alliage d'aluminium.

19. Echangeur de chaleur selon l'une des revendications 14 à 18, **caractérisé en ce que** l'échangeur de chaleur est un évaporateur (10) de circuit de climatisation.

## Claims

1. Manufacturing process for a heat exchanger, in particular, an evaporator, including the preparation (A), assembly (B) and brazing (C) of components of the heat exchanger (1), wherein the brazing(C) is carried out in given temperature conditions, **characterised in that** it comprises, prior to the assembly (C) and the brazing (B), a surface treatment operation (A101, A114) consisting of applying to at least one selected component (6) a coating (102) comprising a support, at least one active agent capable of conferring the chosen properties to the heat exchanger (1) during its action, and at least one thermal protection agent that is capable of allowing the coating (102) to resist the conditions of the brazing temperature.

2. Process of claim 1, **characterised in that** said active agent is a hydrophilic agent.

3. Process of claim 1 or 2, **characterised in that** said active agent is an anti-microbic agent.

4. Process of claim 3, **characterised in that** said coating (102) comprises a support, a hydrophilic agent, an anti-microbic agent and a thermal protection agent.

5. Process of any of claims 1 to 4, **characterised in that** said thermal protection agent comprises a bronze of aluminium and/or a silicon based binding agent.

6. Process of any of claims 1 to 5, in which the components of the heat exchanger comprise at least one collector (2), ducts (4) for the circulation of a fluid and fins (6) in contact with the ducts (4), **characterised in that** the surface treatment (A101, A114) is,carried out on the material of the fins (6).

7. Process of claim 6, **characterised in that** for each fin (6), the preparation comprises a surface treatment step (A101) and a step for forming (A104) the fin (6).

8. Process of claim 7, **characterised in that** the surface treatment (A101) is carried out by quench hardening.

9. Process of claim 7, **characterised in that** the surface treatment (A101) is carried out by spraying.

10. Process of claim 7, **characterised in that** the surface treatment (A101) is carried out by induction.

11. Process of any of claims 6 to 10, **characterised in that** the preparation (A) comprises a drying step (A102, A115).

12. Process of any of claims 1 to 11, **characterised in that** the brazing (C) is strong brazing carried out in a controlled atmosphere at a temperature of more than 400°C and substantially equal to 630°C.

13. Process of any of claims 1 to 11, **characterised in that** the brazing (C) is strong brazing carried out in a vacuum.

14. Heat exchanger **characterised in that** it is made using a process of any of the previous claims and comprises components of which at least one has been subjected to a surface treatment (A101, A114) of any of the previous claims.

15. Heat exchanger of claim 14, **characterised in that** the components comprise at least one collector (2), ducts (4) for the circulation of a fluid and fins (6) in contact with the ducts (4), and **in that** the surface treatment (A101, A114) is carried out on the material of the fins (6).

16. Heat exchanger of claim 15, **characterised in that** the ducts are tubes (4).

17. Heat exchanger of claim 16, **characterised in that** the ducts are plates (12).

18. Heat exchanger of any of claims 14 to 17, **characterised in that** the components are made of aluminium alloy.

19. Heat exchanger of any of claims 14 to 18, **characterised in that** the heat exchanger is an evaporator (10) of an air conditioning circuit.

## Patentansprüche

1. Verfahren zur Herstellung eines Wärmeaustauschers, insbesondere eines Verdampfers, das die Arbeitsschritte Vorbereiten (A), Zusammenbauen (B) und Hartlöten (C) der Bauteile des Wärmeaustauschers (1) beinhaltet, wobei das Hartlöten (C) unter gegebenen Temperaturbedingungen erfolgt, **dadurch gekennzeichnet, dass** es vor dem Zusammenbauen (C) und Hartlöten (B) einen Arbeitsschritt Oberflächenbehandlung (A101, A114) beinhaltet, der darin besteht, auf mindestens einem bestimmten Bauteil (6) eine Beschichtung (102) anzubringen, die ein Trägermaterial und mindestens einen Wirkstoff, der dazu geeignet ist, dem Wärmeaustauscher (1) bei dessen Betrieb bestimmte Eigenschaften zu verleihen, und mindestens einen wärmeschützenden Wirkstoff besitzt, der dazu geeignet ist, die Beschichtung (102) gegen die beim Hartlöten auftretenden Temperaturbedingungen widerstandsfähig zu machen

2. Verfahren nach Anspruch 1, **dadurch gekennzeichnet, dass** der besagte Wirkstoff hydrophil ist.

3. Verfahren nach Anspruch 1 oder 2, **dadurch gekennzeichnet, dass** der besagte Wirkstoff antimikrobisch ist.

4. Verfahren nach Anspruch 3, **dadurch gekennzeichnet, dass** die besagte Beschichtung (102) eine Trägerschicht sowie einen hydrophilen, einen antimikrobischen und einen wärmeschützenden Wirkstoff besitzt.

5. Verfahren nach einem der Ansprüche 1 bis 4, **dadurch gekennzeichnet, dass** der besagte wärmeschützende Wirkstoff aus Aluminiumbronze und / oder einem Bindemittel auf Siliziumbasis besteht.

6. Verfahren nach einem der Ansprüche 1 bis 5, bei dem die Bauteile des Wärmeaustauschers mindestens aus einem Endboden (2), Kanälen (4) zum Durchfließen eines Mediums und Rippen (6) besteht, die mit den Kanälen (4) in Kontakt sind, **dadurch gekennzeichnet, dass** die Oberflächenbehandlung (A101, A114) auf dem Werkstoff der Rippen (6) erfolgt.

7. Verfahren nach Anspruch 6, **dadurch gekennzeichnet, dass** bei jeder Rippe (6) der Arbeitsschritt Vorbereiten eine Etappe Oberflächenbehandlung (A101) und eine Etappe Formgebung (A104) der Rippe (6) beinhaltet.

8. Verfahren nach Anspruch 7, **dadurch gekennzeichnet, dass** die Oberflächenbehandlung (A101) durch Eintauchen erfolgt.

9. Verfahren nach Anspruch 7, **dadurch gekennzeichnet, dass** die Oberflächenbehandlung (A101) durch Besprühen erfolgt.

10. Verfahren nach Anspruch 7, **dadurch gekennzeichnet, dass** die Oberflächenbehandlung (A101) durch Beschichten erfolgt.

11. Verfahren nach einem der Ansprüche 6 bis 10, **dadurch gekennzeichnet, dass** das Vorbereiten (A) eine Etappe Trocknen (A102, A115) beinhaltet.

12. Verfahren nach einem der Ansprüche 1 bis 11, **dadurch gekennzeichnet, dass** das Hartlöten (C) durch Hartlöten unter Schutzgas und bei einer Temperatur erfolgt, die über 400°C liegt weitgehend 630°C beträgt.

13. Verfahren nach einem der Ansprüche 1 bis 11, **dadurch gekennzeichnet, dass** das Hartlöten (C) durch Hartlöten in Vakuum erfolgt.

14. Wärmeaustauscher, **dadurch gekennzeichnet, dass** er nach einem Verfahren nach einem der vorhergehenden Ansprüche hergestellt ist und aus Bauteilen besteht, von denen mindestens einer der Oberflächenbehandlung (A101, A114) nach einem der obigen Ansprüche unterzogen wurde.

15. Wärmeaustauscher nach Anspruch 14, **dadurch gekennzeichnet, dass** seine Bauteile mindestens aus einem Endboden (2), Kanälen (4) zum Durchfließen eines Mediums und Rippen (6) besteht, die mit den Kanälen (4) in Kontakt sind und dass die Oberflächenbehandlung (A101, A114) auf dem Werkstoff der Rippen (6) erfolgt.

16. Wärmeaustauscher nach Anspruch 15, **dadurch gekennzeichnet, dass** die Kanäle Rohre (4) sind.

17. Wärmeaustauscher nach Anspruch 16, **dadurch gekennzeichnet, dass** die Kanäle Platten (12) sind.

18. Wärmeaustauscher nach einem der Ansprüche 14 bis 17, **dadurch gekennzeichnet, dass** die Bauteile aus Aluminiumlegierung bestehen.

19. Wärmeaustauscher nach einem der Ansprüche 14 bis 18, **dadurch gekennzeichnet, dass** der Wärmeaustauscher ein Verdampfer (10) für eine Klimaanlage ist.
